Europäisches Patentamt

European Patent Office

Office européen des brevets

(19)

(11) Veröffentlichungsnummer : **0 356 630 B1**

(12) **EUROPÄISCHE PATENTSCHRIFT**

(45) Veröffentlichungstag der Patentschrift :
23.09.92 Patentblatt 92/39

(51) Int. Cl.⁵ : **B23Q 3/152,** H01F 7/02,
B23B 31/28

(21) Anmeldenummer : **89110429.1**

(22) Anmeldetag : **09.06.89**

(54) **Magnetischer Halter.**

(30) Priorität : **30.08.88 CH 3229/88**

(43) Veröffentlichungstag der Anmeldung :
**07.03.90 Patentblatt 90/10**

(45) Bekanntmachung des Hinweises auf die
Patenterteilung :
**23.09.92 Patentblatt 92/39**

(84) Benannte Vertragsstaaten :
**AT DE ES FR GB IT**

(56) Entgegenhaltungen :
**DE-A- 1 489 798
DE-A- 1 514 388
DE-A- 2 018 332
DE-A- 2 146 514
DE-A- 2 312 801**

(56) Entgegenhaltungen :
**DE-U- 8 633 203
US-A- 2 828 131
US-A- 2 883 197
US-A- 4 422 652**

(73) Patentinhaber : **H.A. SCHLATTER AG
Brandstrasse 24
CH-8952 Schlieren Zürich (CH)**

(72) Erfinder : **Marbacher, Jean
Chäppele Acher 2 G
CH-6017 Ruswil (CH)**
Erfinder : **Gunziger, Urs
Grünfeldstrasse 7
CH-6208 Oberkirch (CH)**

(74) Vertreter : **Keller, René, Dr. et al
Patentanwälte Dr. René Keller & Partner
Postfach 12
CH-3000 Bern 7 (CH)**

## Beschreibung

Die Erfindung bezieht sich auf einen magnetischen Halter für einen einzelnen Draht. Solche Halter sind insbesondere an einer Gitterschweissmaschine zu verwenden, um von einer Vielzahl von Drähten, die auf die gewünschte Länge des zu schweissenden Gitters abgeschnitten sind, die jeweils für ein Gitter erforderliche Anzahl Längsdrähte gleichzeitig zu vereinzeln und der Schweissmaschine miteinander im gewünschten Längsdrahtabstand zuzuführen. Dabei sind die magnetischen Halter in diesem Abstand voneinander über den neben- und übereinander liegenden Drähten nahe einem Ende derselben anzuordnen. Sie werden gemeinsam auf die Drähte abgesenkt, um je ein Endstück eines einzelnen Drahtes magnetisch zu halten und diese Drahtendstücke gemeinsam abzuheben und von den anderen Drähten zu lösen, woraufhin eine Transportvorrichtung die freien Enden der Drahtendstücke ergreift und die teilweise abgehobenen Drähte in Längsrichtung abzieht, wobei diese, soweit erforderlich, von den anderen Drähten entwirrt werden. Zum Vereinzeln der Drähte müssen die Halter so ausgeführt sein, dass sie jeweils nur einen Draht eines bestimmten Durchmessers, ev. Durchmesserbereiches, halten. Zur Umstellung auf einen anderen Drahtdurchmesser bzw. Drahtdurchmesserbereiches mussten jeweils alle Halter ausgewechselt werden. Dabei war die Umstellung von einem Drahtdurchmesser auf einen anderen zeitraubend und die dadurch bedingte Stillstandszeit der Maschine entsprechend lang. Bei Gitterschweissmaschinen mit einer solchen Längsdrahtzufuhreinrichtung ist es aber wichtig, die durch Umstellung auf einen anderen Drahtdurchmesser verursachten Stillstandszeiten sehr kurz zu halten.

Hier will die Erfindung Abhilfe schaffen. Durch die Erfindung, wie sie im Patentanspruch 1 gekennzeichnet ist, wird die Aufgabe gelöst, einen magnetischen Halter für einen einzelnen Draht zu schaffen, der auf einfache Weise in kürzester Zeit von einem Drahtdurchmesser oder Drahtdurchmesserbereich auf einen anderen umgestellt werden kann. Gegenstand des Patentanspruchs 8 ist eine mit solchen magnetischen Haltern ausgerüstete Einrichtung an einer Gitterschweissmaschine, bei der die durch eine Umstellung auf einen anderen Drahtdurchmesser oder Drahtdurchmesserbereich bedingte Stillstandszeit sehr viel kürzer ist als bisher. In den abhängigen Patentansprüchen sind besondere Ausführungsarten dieser Erfindungen angegeben.

Die durch die Erfindung erzielten Vorteile sind im wesentlichen darin zu sehen, dass der Magnetkopf zur Umstellung von einem Drahtdurchmesser oder -durchmesserbereich auf einen anderen nur gedreht zu werden braucht, und in seiner neuen Stellung, beispielsweise durch eine Rastvorrichtung gesichert ist.

Im folgenden wird die Erfindung anhand der beiliegenden, nur einen Ausführungsweg darstellenden Zeichnungen näher erläutert. Es zeigen:

Fig. 1 Einen Achsenlängsschnitt eines Magnetkopfes, nach der Schnittlinie I-I in Fig. 2,

Fig. 2 eine teils ausgebrochene Stirnansicht in Blickrichtung II in Fig. 1,

Fig. 3 eine Seitenansicht eines magnetischen Halters, der aus einem Magnetkopf nach Fig. 1 und 2 und einem Magnetkopfhalter besteht, der an einem mit einer Drahtklemmzange ausgerüsteten Träger auf- und abbewegbar getragen ist,

Fig. 4 eine Ansicht in Blickrichtung IV in Fig. 3,

Fig. 5 eine schematische Seitenansicht einer Einrichtung zum Vereinzeln und Zuführen der Längsdrähte für eine Gitterschweissmaschine.

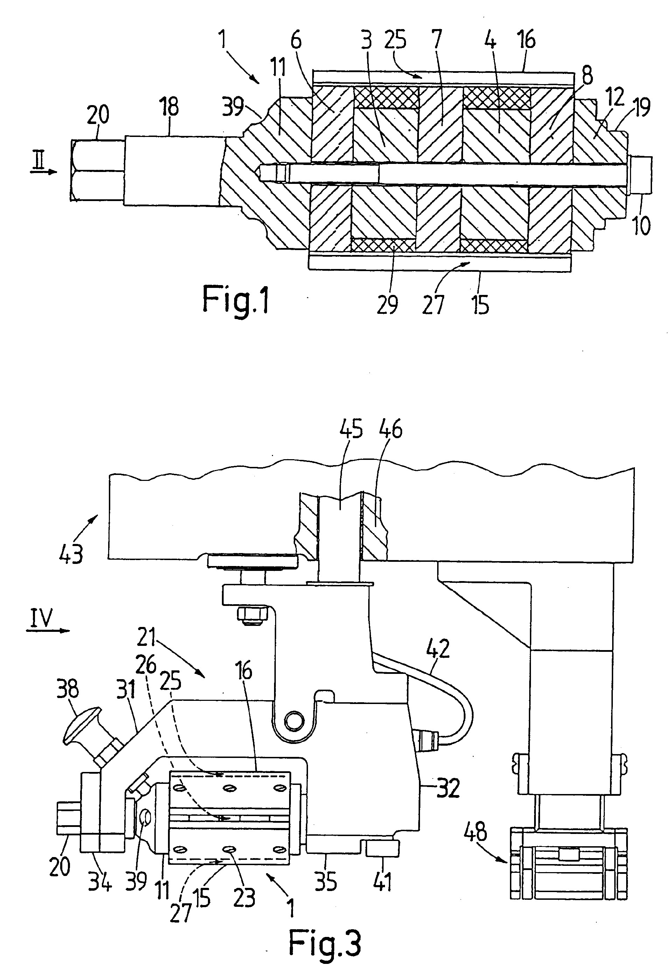

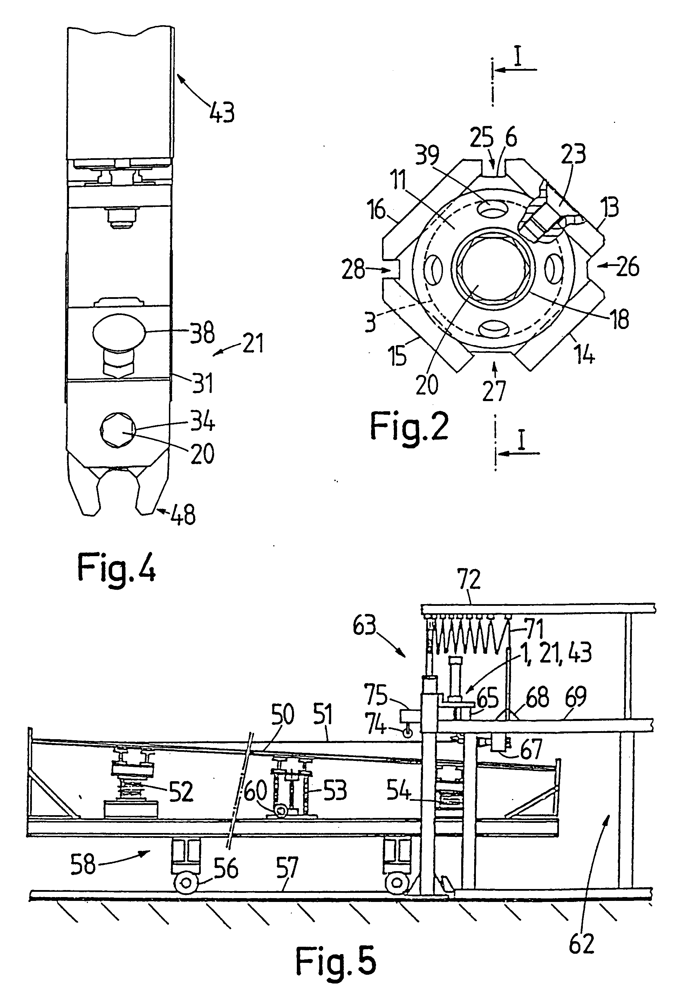

In den Fig. 1 und 2 ist ein Magnetkopf 1 dargestellt, der in seinen wesentlichen Teilen aus zwei zylindrischen, koaxialen, axial magnetisierten Permanentmagneten 3 und 4, drei Polschuhen 6, 7 und 8, einer Spannschraube 10, zwei Endscheiben 11 und 12 und vier Platten 13-16 aus nichtmagnetischem Material besteht. Die Polschuhe 6, 7, 8 überragen die Magnete 3 und 4 in radialer Richtung. Der Polschuh 7 ist zwischen den einander zugewandten Enden der Magnete 3 und 4, der Polschuh 6 bzw. 8 ist am anderen Ende des Magneten 3 bzw. 4 angeordnet. Es hat sich gezeigt, dass es für die magnetische Anziehung günstig ist, wenn gleichnamige Pole der Magnete 3 und 4 am mittleren Polschuh 7 anliegen. Die Endscheiben 11 und 12 sind koaxial zu den Magneten 3 und 4 an den Polschuhen 6 und 8 angeordnet und je mit einem Achszapfen 18 bzw. 19 ausgeführt, mit denen der Magnetkopf 1 in Lagern eines Magnetkopfhalters 21 zu lagern ist, wie im Zusammenhang mit Fig. 3 und 4 erläutert. Am Ende des Achszapfens 18 ist ein Sechskant 20 gebildet, an dem ein Schlüssel zum Drehen des Magnetkopfes 1 angesetzt werden kann. Die Magnete 3 und 4 und Polschuhe 6, 7, 8 sind zwischen den Endscheiben 11, 12 mittels der zu diesen koaxialen Spannschraube 10 zusammengepresst.

Die Platten 13-16 haben gleiche Abstände von der Spannschraube 10, sie bilden einen die Magnete 3, 4 und Polschuhe 6, 7, 8 umschliessenden, an den Polschuhen 6, 7, 8 anliegenden Mantel eines vierseitigen Prismas, wobei die Platten 13-16 durch Schrauben 23 an die Polschuhe 6, 7, 8 geschraubt sind, die zu diesem Zwecke einen polygonalen Umriss haben. Zwischen den zur Prismenachse (Spannschraube 9) parallelen Rändern benachbarter Platten 13-16 ist jeweils eine Spalte 25, 26, 27 bzw. 28 gebildet. Der lichte Querschnitt jeder dieser Spalten 25-28 ist zur Aufnahme eines magnetisch zu haltenden Drahtes eines bestimmten Durchmessers oder Durchmesserbereiches bemessen. Im Bereiche der Polschuhe 6, 7, 8 erstreckt sich jede der Spalten 25-28 bis an den Polschuh. Zu diesem Zwecke haben alle Polschuhe 6, 7, 8 denselben achteckigen Umriss, an dem längere je an einer der Platten 13-16 anliegende und kürzere, je eine der Spalten 25, 26, 27 innen begrenzende Umrissseiten abwechselnd aufeinander folgen. Die innen durch den Magneten 3 bzw. 4 und in axialer Richtung durch die den Magneten 3 bzw. 4 überragenden Randzonen der Polschuhe 6 und 7 bzw. 7 und 8 begrenzten Ringräume sind mit einer Masse 29 ausgefüllt, deren Umriss dem der Polschuhe 6, 7, 8 entspricht. Dadurch wird erreicht, dass sich dort kein schwierig zu entfernender Eisenstaub ansammeln kann, der das zum magnetischen Halten des Drahtes erforderliche Magnetfeld schwächen, nämlich einen magnetischen Nebenschluss bilden würde. Nach längerem Gebrauch in den Spalten haftender Eisenstaub kann leicht in deren Längsrichtung entfernt, z. B. herausgebürstet werden.

Die einander gegenüberstehenden, jeweils eine der Spalten 25-28 bildenden Randflächen der Platten 13-16 können parallel sein, wie bei den Spalten 25 und 28 oder nach aussen divergieren, wie bei den Spalten 26 und 27. Der Magnetkopf kann auch mit Elektromagneten anstelle der Permanentmagnete 3 und 4 sinngemäss ausgeführt werden.

Der Magnetkopfhalter 21 hat, wie aus Fig. 3 ersichtlich, die Form eines Jochs mit zwei Schenkeln 31 und 32, an deren (unteren) Enden Lager 34, 35 für die Achszapfen 18 und 19 des Magnetkopfes 1 sind. Der auf diese Weise drehbar am Magnetkopfhalter 21 gelagerte Magnetkopf 1 ist in vier Stellungen mittels einer Rastvorrichtung arretierbar, die einen im Jochschenkel 31 verschiebbaren Rastbolzen 38 hat, der durch eine (nicht dargestellte) Feder belastet ist, um in jeder dieser vier Stellungen des Magnetkopfes 1 in eine von vier Vertiefungen 39 zu greifen, die an einer konischen Fläche der Endscheibe 11 des Magnetkopfes 1 gebildet sind. In jeder dieser Raststellungen ist eine der Spalten 25-28 in ihrer Arbeitsstellung, nämlich an der untersten Stelle des den Magnetkopfhalter 21 unten überragenden Magnetkopfes 1. Auf diese Weise kann der aus dem Magnetkopf 1 und dessen Halter 21 bestehende magnetische Halter schnell und mühelos auf jedem vom vier Drahtdurchmessern bzw. -durchmesserbereichen eingestellt werden. Am (unteren) Ende des anderen Jochschenkels 32 des Magnetkopfhalters 21 ist ein (beispielsweise induktiver) Sensor 41 so angeordnet, dass er anspricht, wenn in der in Arbeitsstellung befindlichen Spalte, z. B. 27, des Magnetkopfes 1 ein Draht parallel zur Magnetkopfachse magnetisch gehalten ist. Mit 42 ist ein Teil der Sensor-Anschlussleitung bezeichnet. Der Sensor 41 kann dazu dienen, in diesem Falle einen Vorgang auszulösen, wie beispielsweise im Zusammenhang mit Fig. 5 im folgenden beschrieben.

In Fig. 3 und 4 ist der aus dem Magnetkopf 1 und dem Magnetkopfhalter 21 bestehende magnetische Halter zusammen mit einem Träger 43 dargestellt, an dem er mittels einer Hubvorrichtung gesenkt werden kann, um einen von mehreren auf einer Unterlage parallel zur Achse des Magnetkopfes 1 liegenden Drähte aufzunehmen, und gehoben werden kann, um diesen Draht von den anderen zu lösen, wie im Zusammenhang mit Fig. 5 weiter unten beschrieben. Die Hubvorrichtung, von der lediglich eine Schubstange 45 und deren Führung 46 teilweise dargestellt sind, ist zweckmässig eine doppelt wirkende pneumatische oder hydraulische Zylinder-Kolben-Einheit.

Am Träger 43 ist eine z. B. hydraulisch oder pneumatisch betätigbare Klemmzange 48 zum Festhalten eines in der gehobenen Lage des magnetischen Halters 1, 21 magnetisch gehaltenen Drahtes, auf den der Sensor 41 angesprochen hat, angeordnet.

Bei der Einrichtung nach Fig. 5 zum Vereinzeln der Längsdrähte für ein in einer nicht dargestellten Gitterschweissmaschine zu schweissendes Gitter liegen die Drähte 50 annähernd parallel an- und aufeinander auf einer Stützvorrichtung mit Stützen 52, 53, 54, die als ein mittels Rollen 56 auf Schienen 57 fahrbarer Längsdrahtwagen ausgeführt ist. Die Stützen 52, 53, 54 verlaufen quer zur der Drahtlängsrichtung entsprechenden Längsrichtung des Längsdrahtwagens 58. Die mittlere Stütze 53 ist mit einem Vibrator 60 ausgerüstet.

Der Längsdrahtwagen 58 ragt in seiner in Fig. 5 dargestellten Arbeitslage in ein Gestell 62 einer nur teilweise dargestellten Transporteinrichtung 63 hinein, die dazu dient, jeweils die Längsdrähte für ein zu schweissendes Gitter miteinander der Gitterschweissmaschine zuzuführen. An dem Ende des Gestells 62, in das der Längsdrahtwagen 58 in Arbeitsstellung hineinragt, ist für jeden Längsdraht eine Baugruppe 1, 21, 43 der in Fig. 3 und 4 dargestellten Art angeordnet. Diese Baugruppen 1, 21, 43 sind an einer Traverse 65 des Gestells 62 zum Einstellen auf den jeweiligen Längsdrahtabstand des zu schweissenden Gitters verschiebbar und fixierbar, wobei nach Bedarf weitere solche Baugruppen hinzugefügt oder überflüssige abgenommen werden können. Die Transporteinrichtung 63 hat zu jeder Baugruppe einen (nicht näher dargestellten) Greifer 67. Die Greifer sind an einem Schlitten 68, der sich quer zum Gestell 62 erstreckt und an Schienen 69 in Transportrichtung geführt ist, quer zur Transportrichtung verstellbar und fixierbar. Sie werden so am Schlitten 68 fixiert, dass jeder Greifer 67 mit der Klemmzange 48 (Fig. 3 und 4) einer der Baugruppen 1, 21, 43 fluchtet. Die Greifer sind in nicht näher dargestellter Weise gemeinsam betätigbar, wozu eine Druckmittelleitung 71 an einer Hängebahn 72 vorgesehen ist.

Um von den auf den Stützen 52, 53, 54 abgestützten Drähten 50 die Längsdrähte für ein zu schweissendes Gitter zu vereinzeln und der Schweissmaschine gemeinsam zuzuführen, werden die magnetischen Halter 1, 21 mittels der Hubvorrichtung 45, 46 (Fig. 3) von ihren Trägern 43 auf die in das Gestell 62 hineinragenden Enden der Drähte 50 abgesenkt. Von den Drähten 50, die im Bereich der Magnetköpfe 1 hinreichend parallel zur Längsrichtung des Längsdrahtwagens 58 einem der Magnetköpfe 1 nahe sind, wird jeweils nur einer in dessen Spalte 27 magnetisch angezogen und gehalten. Nun werden die magnetischen Halter 1,21 mit den von ihren Magnetköpfen 1 gehaltenen Drähten mittels der Hubvorrichtung 45, 46 gehoben. Wenn ein magnetischer Halter 1, 21 einen der Drähte 50 in der richtigen Lage aufgenommen hat und hält, spricht der Sensor 41 dieses magnetischen Halters an und löst nach dem Heben desselben den Schliessvorgang der diesem zugeordneten Klemmzange 48 aus, so dass diese den abgehobenen, magnetisch gehaltenen Draht 51 erfasst. Wenn ein Sensor 41 nicht anspricht, hat der betreffende magnetische Halter 1, 21 keinen Draht in der richtigen Lage aufgenommen. Dieser magnetische Halter 1,21 wird dann erforderlichenfalls mehrfach nochmals gesenkt und wieder gehoben, bis dies zum Abheben eines Drahtes führt. Mittels des Vibrators 60 können die Drähte 50 gerüttelt werden, um den Vorgang des Vereinzelns zu fördern. Sobald jede Baugruppe 1, 21, 43 einen Draht gehoben hat und derselbe in der Klemmzange 48 festgeklemmt ist, ergreifen die Greifer 67 die freien Enden dieser Drähte 51, woraufhin die Klemmzangen 48 gelöst werden, und eine sich über die ganze Breite der Transporteinrichtung 63 erstreckende Rolle 74 mittels eines Verschiebeantriebes 75 auf die abgehobenen Drähte 51 an der den Greifern 67 abgewandten Seite der magnetischen Halter 1, 21 gedrückt wird, um die Drähte 51 von den Magnetköpfen 1 zu lösen. (Die Rolle 74 ist in Fig. 5 zur Vereinfachung der Darstellung neben dem Gestell 62 gezeigt, man wird sie im Gestell naben den magnetischen Haltern 1, 21 anordnen.) Der Schlitten 68 mit den Greifern 67 wird nun an den Schienen 69 zur Schweissmaschine hin verschoben, um die Längsdrähte 51 für das zu schweissende Gitter zur Schweissmaschine zu ziehen, wobei die Längsdrähte 51 von den anderen Drähten 50 weggezogen und dabei, soweit noch erforderlich, sich auch von diesen entwirren. Nachdem die Längsdrähte 51 von der Schweissmaschine übernommen sind, werden die Greifer 67 gelöst und zurück bewegt. Die Einrichtung ist dann wieder im Ausgangszustand, um die Längsdrähte für das nächste zu schweissende Gitter den Drähten 50 zu entnehmen und der Schweissmaschine zuzuführen wie vorher beschrieben. Die Einrichtung wird zusammen mit der Schweissmaschine automatisch gesteuert.

## Patentansprüche

1. Magnetischer Halter für einen einzelnen Draht, mit einem Magnetkopf (l), der an mehreren, vorspringenden Stellen je eine Spalte (25-28), deren Querschnitt zur Aufnahme eines magnetisch gehaltenen Drahtes eines bestimmten Durchmessers oder Durchmesserbereiches bemessen ist, und mit einem Magnetkopfhalter (21), an dem der Magnetkopf (l) bezüglich einer Achse drehbar gelagert und in mehreren Stellungen, in denen jeweils eine der Spalten (25-28) in einer vorbestimmten Arbeitsstellung am Magnetkopfhalter (21) ist, fixierbar ist, wobei der Magnetkopf (l) wenigstens einen zu seiner Achse koaxialen, stab- oder scheibenförmigen Magneten (3, 4) mit ihn radial überragenden Polschuhen (6, 7, 8) enthält und wobei die Spalten (25-28) parallel zur Achse je zwischen zwei einander benachbarten Platten (13-16) aus nicht magnetischem Material gebildet sind.

2. Magnetischer Halter nach Anspruch 1, dadurch gekennzeichnet, dass der Magnetkopf (l) prismatisch und um die Prismenachse drehbar gelagert ist und dass die Platten (13-16) den Prismenmantel bilden.

3. Magnetischer Halter nach Anspruch 2, dadurch gekennzeichnet, dass die einander zugewandten Enden zweier oder je zweier, koaxial hintereinander angeordneter Magnete (3, 4) einen Polschuh (7) gemeinsam haben und vorzugsweise entgegengesetzte Magnetisierungsrichtungen aufweisen.

4. Magnetischer Halter nach Anspruch 2, dadurch gekennzeichnet, dass die Zwischenräume zwischen den Teilen der Polschuhe (6, 7, 8), die den oder die Magnete (3, 4) radial überragen, bis an die Basis der Spalten (25-28) durch Füllkörper (29) ausgefüllt, insbesondere ausgegossen sind.

5. Magnetischer Halter nach Anspruch 2, dadurch gekennzeichnet, dass die Spalten (25-28) zwischen parallelen oder nach aussen divergierenden Randflächen der Platten (13-16) gebildet sind.

6. Magnetischer Halter nach Anspruch 1, dadurch gekennzeichnet, dass der Magnetkopfhalter (21) mit einem Sensor (41) ausgerüstet ist, der in Längsrichtung der jeweils in Arbeitsstellung befindlichen Spalte (z. B. 27) des Magnetkopfes (1) gegen diese versetzt ist, um auf einen in der betreffenden Spalte gehaltenen Draht anzusprechen.

7. Magnetischer Halter nach Anspruch 1, dadurch gekennzeichnet, dass der magnetische Halter (1, 21) an einem Träger (43) mittels einer Hubvorrichtung (45/46) auf und ab bewegbar ist, der vorzugsweise mit einer Klemmzange (48) für den vom magnetischen Halter (1,21) in dessen gehobener Lage gehaltenen Draht ausgerüstet ist.

**8.** Einrichtung an einer Gitterschweissmaschine, zum Vereinzeln annähernd parallel aneinander liegender Drähte für ein zu schweissendes Gitter, mit magnetischen Haltern nach einem der Ansprüche 1 bis 7, wobei für jeden der Längsdrähte (50) für das zu schweissende Gitter einer der magnetischen Halter (1, 21) über einem Ende einer Stützvorrichtung (58) für die zu vereinzelnden Drähte absenkbar und abhebbar angeordnet ist, bei dem (1, 21) die jeweils in Arbeitsstellung befindliche Spalte (z. B. 27) des Magnetkopfes (1) an dessen tiefsten Stelle parallel zu der der Längsrichtung der Drähte (50) entsprechenden Längsrichtung der Stützvorrichtung (58) ist, um in auf die Drähte (50) abgesenkter Lage des magnetischen Halters (1, 21) einen der Drähte aufzunehmen und magnetisch zu halten und beim Abheben einen Endteil dieses Drahtes von den anderen Drähten (50) abzuheben; und jedem der magnetischen Halter (1, 21) einer von mehreren Greifern (67) zugeordnet ist, die gemeinsam auf einer in Längsrichtung der Stützvorrichtung (58) von dieser weg in Richtung auf die Schweissmaschine führenden Bahn (69) verschiebbar sind, an deren Anfang die Greifer (67) je in einer Lage zum Ergreifen des freien Endes des von dem magnetischen Halter abgehobenen Drahtendteils sind, um diese Drähte zu ergreifen und nach Lösen vom Magnetkopf in Richtung der Bahn (69) abzuziehen.

**9.** Einrichtung nach Anspruch 8, dadurch gekennzeichnet, dass die magnetischen Halter (1, 21) einzeln absenkbar und abhebbar und je mit einem Sensor (41) zur Erzeugung eines Signals bei Anwesenheit eines am Magnetkopf (1) magnetisch gehaltenen Drahtes ausgerüstet sind; dass eine Steuervorrichtung bei abgesenktem Magnetkopf und fehlendem Anwesenheitssignal ein Abheben und nochmaliges Absenken des betreffenden magnetischen Halters auslöst; und dass die Stützvorrichtung (58) mit einem Vibrator (60) ausgerüstet ist, um die von ihr unterstützten Drähte (50) durch Vibration in zum Hineinziehen in die in Arbeitsstellung befindlichen Spalten (27) der magnetischen Halter (1,21) geeignete Lagen zu bringen.

**10.** Einrichtung nach Anspruch 8, gekennzeichnet durch ein an der den Greifern (67) abgewandten Seite der magnetischen Halter (1, 21) angeordnetes Organ (74), das auf die von den magnetischen Haltern (1, 21) abgehobenen Drahtendteile absenkbar ist, um diese von den Magnetköpfen (21) wegzustossen, nachdem ihre freien Enden von den Greifern (67) ergriffen sind.

## Claims

**1.** Magnetic holder for a single wire having a magnetic head (1) which at a plurality of projecting points comprises one slot (25-28) in each case of which the cross-section is dimensioned such that it can accommodate a magnetically retained wire of a given diameter or diameter range, and having a magnetic head holder (21) on which the magnetic head (1) is mounted so as to be rotatable with respect to an axis and can be secured in a plurality of positions in which one of the slots (25-28) is in a predetermined operating position on the magnetic head holder (21) in each case, wherein the magnetic head (1) comprises at least one rod- or disc-shaped magnet (3, 4) which is coaxial with the axis of the magnetic head and has pole shoes (6, 7, 8) which project radially thereabove, and wherein the slots (25-28) are formed from non-magnetic material parallel to the axis each between two adjacent plates (13-16).

**2.** Magnetic holder according to Claim 1, characterised in that the magnetic head (1) is mounted prismatically and so as to be rotatable about the prism axis; and in that the plates (13-16) form the prism surface.

**3.** Magnetic holder according to Claim 2, characterised in that the ends facing one another of two or of each two magnets (3, 4) disposed coaxially behind one another have one pole shoe (7) in common and preferably comprise opposite directions of magnetisation.

**4.** Magnetic holder according to Claim 2, characterised in that the intermediate spaces between the parts of the pole shoes (6, 7, 8), which project radially over the magnet or magnets (3, 4), are filled with a filler (29) up to the base of the slots (25-28), in particular they are completely filled.

**5.** Magnetic holder according to Claim 2, characterised in that the slots (25-28) are formed between parallel or outwardly diverging edge surfaces of the plates (13-16).

**6.** Magnetic holder according to Claim 1, characterised in that the magnetic head holder (21) is equipped with a sensor (41) which in the longitudinal direction of the slot (eg. 27) of the magnetic head (1) which is in the respective operating position is offset with respect to this slot in order to act on a wire held in the relevant slot.

7. Magnetic holder according to Claim 1, characterised in that the magnetic holder (1, 21) can be moved upwards and downwards on a carrier (43) by means of a lifting device (45/46) which is preferably provided with a clamping claw (48) for the wire which is held by the magnetic holder (1, 21) in its raised position.

8. Device on a grid welding machine for separating approximately parallel wires for a grid which is to be welded, having magnetic holders according to any one of Claims 1 to 7, wherein in order for the wires to be separated for each longitudinal wire (50) for the grid to be welded one of the magnetic holders (1, 21) is disposed such that it can be lowered and raised over one end of a support device (58), in the case of which holder (1, 21) the slot (eg. 27) of the magnetic head (1) located in the operating position in each case at the lowest point thereof is parallel to the longitudinal direction of the supporting device (58) corresponding to the longitudinal direction of the wires (50) in order to take up and hold magnetically one of the wires in the position where the magnetic holder (1, 21) is lowered onto the wires (50) and, when one end section of this wire is raised, to raise it from the other wires (50); and there is associated with each of the magnetic holders (1, 21) one of a plurality of gripping devices (67) which can be displaced together on a track (69) which leads in the longitudinal direction of the supporting device (58) away therefrom in the direction of the welding machine, and at the beginning of which the gripping devices (67) are each in a position for grasping the free end of the wire end section raised by the magnetic holder in order to grasp these wires and remove them after separation from the magnetic head in the direction of the track (69).

9. Device according to Claim 8, characterised in that the magnetic holders (1, 21) can be lowered and raised individually and are each provided with a sensor (41) for generating a signal when a magnetically retained wire is present at the magnetic head (1); in that a control device triggers the raising and repeated lowering of the relevant magnetic holder when the magnetic head is lowered and no presence signal is emitted; and in that the supporting device (58) is provided with a vibrator (60) in order to bring the wires (50) supported thereby by vibration into positions suitable for drawing them into the gaps (27) in the magnetic holders (1, 21) located in the operating position.

10. Device according to Claim 8, characterised by a member (74) which is disposed on the side of the magnetic holders (1, 21) facing away from the gripping devices (67) and which can be lowered onto the wire end sections raised by the magnetic holders (1, 21) in order to push the wire end sections away from the magnetic heads (21) when their free ends have been grasped by the gripping devices (67).

**Revendications**

1. Support magnétique pour une baguette métallique individuelle, comprenant une tête magnétique (1) qui présente, dans plusieurs zones saillantes, une saignée respective (25-28) dont la section transversale est dimensionnée en vue de recevoir une baguette métallique retenue magnétiquement, d'un diamètre déterminé ou d'une plage diamétrale déterminée, ainsi qu'un porte-tête magnétique (21) sur lequel la tête magnétique (1) est montée rotative par rapport à un axe, et peut être verrouillée à demeure dans plusieurs positions dans lesquelles l'une considérée des saignées (25-28) occupe une position de travail prédéterminée sur le porte-tête magnétique (21), la tête magnétique (1) renfermant au moins un aimant (3, 4) configuré en une barrette ou en un disque, coïncidant avec son axe et muni de pièces polaires (6, 7, 8) qui en font saillie radialement, et les saignées (25-28) étant formées, parallèlement à l'axe, entre deux plaques respectivement voisines (13-16) en un matériau non magnétique.

2. Support magnétique selon la revendication 1, caractérisé par le fait que la tête magnétique (1) est prismatique, et est montée à rotation autour de l'axe du prisme ; et par le fait que les plaques (13-16) matérialisent l'enveloppe du prisme.

3. Support magnétique selon la revendication 2, caractérisé par le fait que les extrémités, tournées l'une vers l'autre, de deux aimants ou de deux aimants respectifs (3, 4) se succédant coaxialement, possèdent en commun une pièce polaire (7) et présentent des sens de magnétisation orientés, de préférence, à l'opposé

EP 0 356 630 B1

l'un de l'autre.

4. Support magnétique selon la revendication 2, caractérisé par le fait que les espaces intercalaires, entre les parties des pièces polaires (6, 7, 8) qui font saillie radialement au-delà de l'aimant ou des aimants (3, 4), sont comblés et notamment scellés, jusqu'à la base des saignées (25-28), par des corps de garnissage (29).

5. Support magnétique selon la revendication 2, caractérisé par le fait que les saignées (25-28) sont formées entre des surfaces marginales des plaques (13-16), qui sont parallèles ou divergent vers l'extérieur.

6. Support magnétique selon la revendication 1, caractérisé par le fait que le porte-tête magnétique (21) est équipé d'un détecteur (41) qui, dans le sens longitudinal de la saignée (par exemple 27) de la tête magnétique (1) occupant respectivement une position de travail, est décalé par rapport à ladite saignée afin de réagir à la présence d'une baguette métallique retenue dans la saignée considérée.

7. Support magnétique selon la revendication 1, caractérisé par le fait que ce support magnétique (1, 21) est mobile à va-et-vient vertical, au moyen d'un dispositif de levage (45/46), sur une console de support (43) dotée, de préférence, d'une pince de serrage (48) pour la baguette métallique retenue par ledit support magnétique (1, 21), dans la position soulevée de ce dernier.

8. Appareil équipant une machine de soudage de treillis, en vue de dissocier des baguettes métalliques approximativement parallèles les unes aux autres et destinées à un treillis devant être soudé, présentant des supports magnétiques selon l'une des revendications 1 à 7, appareil dans lequel, pour chacune des baguettes longitudinales (50) destinées au treillis devant être soudé, l'un des supports magnétiques (1, 21) est monté avec faculté d'abaissement et de soulèvement au-dessus d'une extrémité d'un dispositif (58) de soutien des baguettes métalliques à dissocier, support magnétique (1, 21) dans lequel la saignée (par exemple 27) de la tête magnétique (1) qui occupe respectivement une position de travail est agencée, dans la zone la plus basse de ladite tête; parallèlement au sens longitudinal du dispositif de soutien (58), correspondant au sens longitudinal des baguettes métalliques (50), de manière à prélever et à retenir magnétiquement l'une des baguettes métalliques dans une position dans laquelle le support magnétique (1, 21) est abaissé sur lesdites baguettes métalliques (50), et de manière à soulever, lors du soulèvement, une région extrême de cette baguette métallique à l'écart des autres baguettes métalliques (50) ; et chacun des supports magnétiques (1, 21) est affecté à l'un de plusieurs organes de préhension (67) pouvant coulisser conjointement sur une piste (69) qui part du dispositif de soutien (58), dans le sens longitudinal de ce dernier, en direction de la machine de soudage, et au début de laquelle lesdits organes de préhension (67) occupent respectivement une position permettant de saisir l'extrémité libre de la région extrême de la baguette métallique soulevée par le support magnétique, de manière à saisir ces baguettes métalliques et à les évacuer, en direction de la piste (69), après relâchement par la tête magnétique.

9. Appareil selon la revendication 8, caractérisé par le fait que les supports magnétiques (1, 21) peuvent être abaissés et soulevés individuellement, et sont respectivement équipés d'un détecteur (41) pour engendrer un signal en présence d'une baguette métallique retenue magnétiquement sur la tête magnétique (1) ; par le fait que, lorsque la tête magnétique est abaissée et lorsqu'aucun signal de présence n'est engendré, un dispositif de commande déclenche un soulèvement, puis un nouvel abaissement du support magnétique considéré ; et par le fait que le dispositif de soutien (58) est équipé d'un vibreur (60) de manière à amener par vibration les baguettes métalliques (50), soutenues par ce dispositif, à des positions se prêtant à l'insertion dans les saignées (27) des supports magnétiques (1, 21) qui occupent une position de travail.

10. Appareil selon la revendication 8, caractérisé par un organe (74) qui est disposé du côté des supports magnétiques (1, 21) tourné à l'opposé des organes de préhension (67), et qui peut être abaissé sur les régions extrêmes des baguettes métalliques soulevées par lesdits supports magnétiques (1, 21), de manière à expulser lesdites régions hors des têtes magnétiques (21) après que leurs extrémités libres ont été saisies par lesdits organes de préhension (67).

7

Fig.1

Fig.3

Fig.4

Fig.2

Fig.5